# EUROPÄISCHE PATENTSCHRIFT

(11) **EP 2 113 360 B1**
(45) Veröffentlichungstag und Bekanntmachung des Hinweises auf die Patenterteilung: **17.07.2013**
(21) Anmeldenummer: 08008279.5
(22) Anmeldetag: 30.04.2008
(51) Int. Cl.: B29C 45/17, B29C 33/00, B29C 39/26

(54) **Gießvorrichtung mit beheizbarer Nebenkavität**
Casting device with heatable auxiliary cavity
Dispositif de coulée doté d'une cavité annexe pouvant être chauffée

(43) Veröffentlichungstag der Anmeldung: 04.11.2009
(73) Patentinhaber: Röchling Automotive AG & Co. KG, 68165 Mannheim (DE)
(72) Erfinder: Romen, Oswald, 39052 Kaltern (IT); Waid, Helmuth, 39052 Kaltern (IT); Delvai, Josef, 39040 Kaltenbrunn (IT)
(74) Vertreter: Trossin, Hans-Jürgen

(56) Entgegenhaltungen:
- EP-A- 1 282 500
- US-A- 5 759 459

## Beschreibung

Die vorliegende Erfindung betrifft eine Gießvorrichtung, insbesondere Spritzgießvorrichtung, zur Erzeugung von wenigstens teilweise hohlen Gegenständen mit den Merkmalen des Oberbegriffs von Anspruch 1.

Aus der EP 0 757 936 A ist beispielsweise eine Gießvorrichtung bekannt, bei welcher die Verdrängungsvorrichtung eine Projektilinjektionsvorrichtung ist, welche nach einem Befüllen der Hauptkavität mit fließfähigem Gießmaterial und Öffnen einer Strömungsverbindung von der Hauptkavität zur Nebenkavität unter Verwendung von unter Druck stehendem Fluid ein Projektil durch das Gießmaterial in der Hauptkavität treibt. Dabei verdrängt das Projektil Gießmaterial aus der Hauptkavität in die Nebenkavität, in welcher es schließlich auch selbst landet.

Neben der Projektilinjektionstechnik (PIT), bei welcher fließfähiges Gießmaterial in der Hauptkavität durch einen starren Körper verdrängt wird, der sich längs einer Trajektorie in die Hauptkavität hinein und in der Regel durch diese hindurch bewegt, sind auch Verdrängungsvorrichtungen bekannt, bei welchen Gießmaterial aus der Hauptkavität durch "gestaltlose" Fluide verdrängt wird. Als Beispiel hierfür seien die Gasinjektionstechnologie (GIT) und die Wasserinjektionstechnologie (WIT) genannt. Bei der Gasinjektionstechnologie wird unter Druck stehendes Gas in die mit fließfähigem Gießmaterial befüllte Hauptkavität eingeblasen, so dass Gießmaterial durch das eingeblasene Gas verdrängt wird. Bei der Wasserinjektionstechnologie gilt entsprechendes, wobei anstelle eines Gases Wasser als das verdrängende Fluid verwendet wird.

Gattungsgemäße Gießvorrichtungen, bei denen Gas-oder/und Wasserinjektionstechnologie zum Einsatz kommen, sind aus US 5759459 A und EP 1282500 B1 bekannt.

Wenn in dieser Anmeldung von einem "Einfüllen" von fließfähigem Gießmaterial in eine Hauptkavität durch die Füllvorrichtung die Rede ist, so ist damit nicht ausschließlich das vollständige Befüllen der Hauptkavität bezeichnet. Vielmehr soll auch der Fall umfasst sein, dass eine Hauptkavität nur teilweise mit fließfähigem Gießmaterial befüllt wird, so dass durch anschließende Aktivierung der Verdrängungsvorrichtung zunächst das Gießmaterial aus dem ursprünglichen Befüllungszustand in noch ungefüllte Bereiche der Hauptkavität verdrängt wird und lediglich ein Überschussanteil von Gießmaterial in die Nebenkavität gelangt.

Es ist Aufgabe der vorliegenden Erfindung, eine gattungsgemäße Gießvorrichtung weiter zu verbessern.

Diese Aufgabe wird erfindungsgemäß durch eine Gießvorrichtung mit den Merkmalen des Anspruchs 1 gelöst. Die Nebenkavität ist dabei zumindest abschnittsweise, vorzugsweise vollständig, beheizbar. Durch die Beheizbarkeit der Nebenkavität ist die Voraussetzung geschaffen, dass das in der Nebenkavität aufgefangene Gießmaterial in der Nebenkavität nicht mehr erstarrt und somit als fließfähiges Gießmaterial in der Nebenkavität für eine weitere Verwendung in einem Gießverfahren bereitgestellt bleiben kann.

Es ist mit anderen Worten also eine Heizvorrichtung an der Gießvorrichtung derart angeordnet und ausgebildet, dass die Nebenkavität durch diese Heizvorrichtung beheizbar ist, insbesondere so beheizbar ist, dass das in die Nebenkavität hinein verdrängte Gießmaterial fließfähig gehalten werden kann. Es soll also bevorzugt die Nebenkavität auf eine Temperatur beheizbar sein, welche über der Erweichungs- oder Schmelztemperatur des verwendeten Gießmaterials liegt.

Um unnötige Hohlräume in der Nebenkavität zu vermeiden und damit einen unnötig hohen Energieeintrag durch die der Nebenkavität zugeordnete Heizvorrichtung, ist vorzugsweise ein Volumen der Nebenkavität veränderlich. Durch ein derartiges veränderliches Volumen der Nebenkavität kann außerdem die Voraussetzung dafür geschaffen sein, fließfähiges Gießmaterial aus der Nebenkavität hinaus zu verdrängen und damit an einen anderen Ort zu fördern. Weiterhin ist gemäß der vorliegenden Erfindung vorgesehen sein, dass die Nebenkavität Teil einer Fördervorrichtung ist, welche dazu ausgebildet ist, in der Nebenkavität aufgenommenes fließfähiges Gießmaterial zumindest teilweise, vorzugsweise vollständig, aus der Nebenkavität hinaus zu fördern.

Die zum Einfüllen von Gießmaterial in die Hauptkavität vorgesehene Füllvorrichtung umfasst in der Regel einen Gießmaterialvorrat, in welchem zum Einfüllen in die Hauptkavität vorgesehenes fließfähiges Gießmaterial bereitgestellt ist. Erfindungsgemäß weist die Füllvorrichtung auch einen in die Hauptkavität mündenden Füllkanal auf, welcher auch als "Heißkanal" bezeichnet wird. Durch diesen strömt Gießmaterial beim Einfüllen in die Hauptkavität.

Weiterhin ist vorgesehen, dass die Nebenkavität mit dem Füllkanal in Strömungsverbindung steht oder bringbar ist, so dass fließfähiges Gießmaterial durch die Fördervorrichtung, unter Zwischenanordnung eines Strömungskanals, von der Nebenkavität weg in den Füllkanal hinein förderbar ist.

Dadurch kann in vorteilhafter Weise das fließfähige Gießmaterial der Nebenkavität in den Füllstrom an Gießmaterial der Füllvorrichtung zum Einfüllen von Gießmaterial in die Hauptkavität eingeleitet werden. Dies hat vor allem den Vorteil, dass Gießmaterial in jedem Gießvorgang an der gleichen Stelle und in der gleichen Menge in die Hauptkavität eingefüllt werden kann, was die Reproduzierbarkeit der erzeugten Gießprodukte verbessert.

Zur konstruktiven Realisierung der erfindungsgemäß vorgesehenen Fördervorrichtung kann die Nebenkavität beispielsweise ein Kolben-Zylinder-System umfassen, wobei wenigstens ein Teil der Nebenkavität durch Zylinderwände und wenigstens eine Kolbenwand begrenzt ist. Alternativ kann der Nebenkavität auch eine Förderschnecke zugeordnet sein. Diese Förderschnecke kann in der Nebenkavität angeordnet sein oder diese durchsetzen.

Durch die vorgesehene Fördervorrichtung kann die Nebenkavität unmittelbar mit der Hauptkavität derart in Strömungsverbindung stehen oder zumindest bringbar sein, dass fließfähiges Gießmaterial durch die Fördervorrichtung aus der Nebenkavität in die Hauptkavität förderbar ist. Dadurch kann Gießmaterial, welches bei einem Gießvorgang in der Nebenkavität aufgefangen und dort fließfähig gehalten wurde, in einem nachfolgenden Gießvorgang das Füllen der Hauptkavität mit Gießmaterial zumindest unterstützen.

Die Nebenkavität kann unmittelbar durch eine Öffnung mit der Hauptkavität in Strömungsverbindung stehen oder bringbar sein. Es kann jedoch auch die Nebenkavität durch Zwischenanordnung eines Strömungskanals mit der Hauptkavität in Strömungsverbindung stehen oder zumindest bringbar sein. Das Vorsehen eines Strömungskanals zwischen Haupt- und Nebenkavität hat den Vorteil, dass die Nebenkavität mit größerer Freiheit hinsichtlich ihres Anbringungsortes an der Gießvorrichtung vorgesehen sein kann.

Der oben beschriebene Strömungskanal, welcher dazu ausgebildet ist, fließfähiges Gießmaterial von der Nebenkavität weg zu fördern, kann unabhängig davon, wohin er führt, in vorteilhafter Weise zumindest abschnittsweise durch eine Kanal-Heizvorrichtung beheizbar sein, so dass das Risiko einer unerwünschten Erstarrung von Gießmaterial im Strömungskanal vermieden oder reduziert werden kann.

Die Nebenkavität kann an einem Gießwerkzeug, insbesondere an einem die Hauptkavität enthaltenden Formwerkzeug vorgesehen sein. Alternativ oder zusätzlich kann die Nebenkavität auch mit einer Heißkanalbaugruppe der Füllvorrichtung ausgebildet sein, vorzugsweise integral mit dieser. Dabei bedeutet "integral", dass die Nebenkavität nicht ohne weiteres von der Heißkanalbaugruppe trennbar ist, wenngleich die Trennbarkeit zu Reparaturzwecken gegeben sein kann, jedoch mit verhältnismäßig hohem Aufwand, etwa durch Werkzeugangriff.

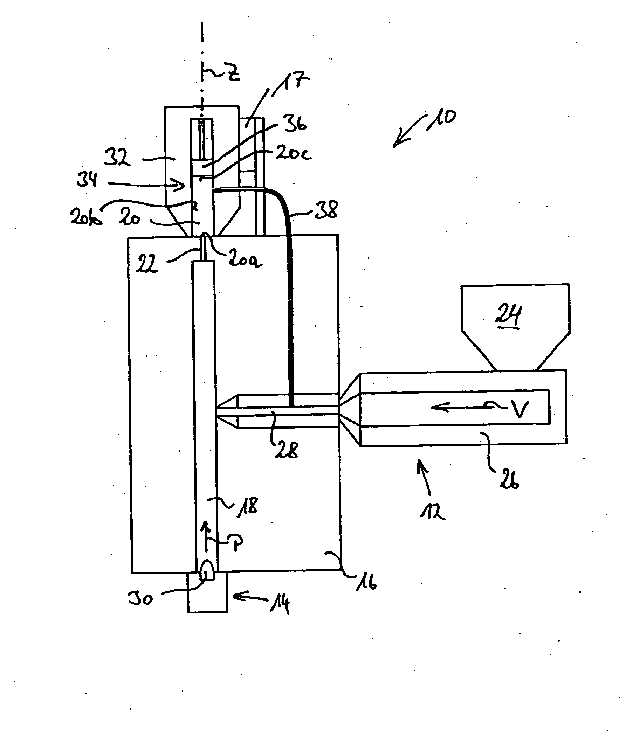

Nachfolgend wird die vorliegende Erfindung anhand der beiliegenden Figuren näher erläutert werden. Die einzige Figur stellt dar: eine schematische Darstellung einer erfindungsgemäßen Gießvorrichtung.

In der einzigen Figur dieser Anmeldung ist eine schematisch dargestellte erfindungsgemäße Gießvorrichtung allgemein mit 10 bezeichnet.

Diese Gießvorrichtung 10 umfasst eine Füllvorrichtung 12, eine Verdrängungsvorrichtung 14, ein Formwerkzeug 16 mit einer Hauptkavität 18 darin, sowie eine am Formwerkzeug 16 durch eine Halterung 17 angebrachte Nebenkavität 20.

Die Hauptkavität 18 und die Nebenkavität 20 stehen durch einen Strömungskanal 22 in Strömungsverbindung miteinander. Der Strömungskanal 22 kann durch ein nicht dargestelltes Ventil gezielt verschlossen und geöffnet werden.

Die Füllvorrichtung 12 umfasst einen Gießmaterialvorrat 24, in welchem Rohmaterial - in dem in der Figur gezeigten Beispiel einer Spritzgießvorrichtung als der Gießvorrichtung 10 thermoplastischer Kunststoff - bevorratet ist.

Ausgehend von dem Gießmaterialvorrat 24 gelangt Gießmaterial in den beheizten Bereich einer an sich bekannten Extrusionsschnecken-Fördereinrichtung 26, in welcher in an sich bekannter Weise Gießmaterial, hier also thermoplastischer Kunststoff, aufgeschmolzen und in Förderrichtung V gefördert wird.

Die Füllvorrichtung 12 umfasst weiterhin einen Heißkanal 28, mittels welchem fließfähiges Gießmaterial von der Extrusionsschnecken-Fördereinrichtung 26 durch einen Abschnitt des Formwerkzeugs 16 hindurch in die Hauptkavität 18 gelangt, und zwar unter dem Förderdruck der Extrusionsschnecken-Fördereinrichtung 26.

Die Verdrängungsvorrichtung 14 ist eine sogenannte "Projektilinjektionsvorrichtung", welche ein Projektil 30 aus Metall, insbesondere Stahl, Keramik oder Glas oder Kunststoff längs einer Projektileindringrichtung P in die Hauptkavität 18 hinein anzutreiben vermag.

Der Antrieb des Projektils 30 erfolgt dabei durch Ausstoß von unter Druck stehendem Fluid, Gas oder Flüssigkeit, insbesondere Druckluft oder unter Druck stehendes Wasser, welches das Projektil 30 vor sich hertreibt.

Beim Eindringen des Projektils 30 in Hauptkavität 18 verdrängt dieses dann, wenn die Hauptkavität 18 zuvor vollständig mit fließfähigem Gießmaterial befüllt wurde, weiterhin fließfähiges Gießmaterial durch den Strömungskanal 22 in die Nebenkavität 20 hinein.

Die Nebenkavität 20 ist dabei an ihrer Mündung 20a zum Strömungskanal 22 hin mit einem an sich bekannten Rückschlagventil (Mündungs-Ventil) ausgestattet, welches eine Strömung von Gießmaterial vom Strömungskanal 22 in die Nebenkavität 20 hinein, jedoch nicht aus dieser heraus in den Strömungskanal 22 gestattet.

Die Nebenkavität 20 ist durch eine Heizvorrichtung 32 derart beheizbar, dass das in die Nebenkavität 20 verdrängte Gießmaterial in der Nebenkavität 20 fließfähig gehalten werden kann.

Weiterhin ist die Nebenkavität 20 durch eine Kolben-Zylinder-Anordnung 34 gebildet, so dass die Nebenkavität 20 unter anderem begrenzt ist durch eine Zylinderwand 20b und die Stirnfläche 20c eines längs einer Zylinderachse Z der Kolben-Zylinder-Anordnung 34 beweglichen Kolbens 36. Somit ist das Volumen der Nebenkavität 20 veränderlich.

Die Nebenkavität 20 ist weiterhin durch einen beheizbaren Kanal 38 mit dem Heißkanal 28 verbunden, so dass in der Nebenkavität vorhandenes Gießmaterial, welches durch die Heizvorrichtung 32 fließfähig gehalten wird, durch eine entsprechende das Volumen der Nebenkavität 20 verkleinernde Bewegung des Kolbens 36 aus der Nebenkavität 20 über den beheizbaren Kanal 38 unmittelbar in den Heißkanal 28 gefördert werden kann. Hierzu wird ausdrücklich darauf hingewiesen, dass der beheizte Kanal 38 anders als in der schematisch Darstellung der Figur in einem der Mündung 20a näheren Längsendbereich der Nebenkavität 20 in selbige münden kann, um durch eine Bewegung des Kolbens 36 möglichst den gesamten Gießmaterialinhalt der Nebenkavität 20 aus der Nebenkavität 20 hinaus zu fördern. Auch der beheizte Kanal 38 kann zur Sicherstellung der Förderwirkung ein nicht dargestelltes Kanal-Ventil aufweisen, welches Gießmaterial nur in Richtung von der Nebenkavität 20 weg aber nicht in umgekehrter Richtung durchlässt.

Mit der in der Figur dargestellten erfindungsgemäßen Gießvorrichtung ist es möglich, durch das Projektil 30 aus der Hauptkavität 18 verdrängtes Gießmaterial ohne aufwändige Zwischenverarbeitung, wie etwa Entnehmen des Gießmaterials aus der Nebenkavität, Schreddern oder Mahlen des erstarrten verdrängten Gießmaterials und erneutes Aufschmelzen desselben in der Füllvorrichtung 12 schneller als bisher dem Produktionsprozess erneut zuzuführen.

Selbstverständlich kann anstelle der in der Figur gezeigten Projektilinjektions-Verdrängungsvorrichtung 14 auch eine Verdrängungsvorrichtung verwendet werden, welche durch Einleiten eines unter Druck stehenden Fluids in die Hauptkavität 18 Gießmaterial in diesem bzw. aus diesem verdrängt. Hierzu kann in an sich bekannter Weise unter Druck stehendes Gas oder eine unter Druck stehende Flüssigkeit in die mit fließfähigem Gießmaterial wenigstens teilweise gefüllte Hauptkavität 18 eingeleitet werden.

## Patentansprüche

1. Gießvorrichtung, insbesondere Spritzgießvorrichtung (10), zur Erzeugung von wenigstens teilweise hohlen Gegenständen, wobei die Gießvorrichtung umfasst:
- eine Füllvorrichtung (12), welche zum Einfüllen von fließfähigem Gießmaterial in eine Hauptkavität (18) ausgebildet ist, sowie
- eine Verdrängungsvorrichtung (14), welche dazu ausgebildet ist, auf ihre Aktivierung hin einen Teil des in die Hauptkavität (18) eingefüllten Gießmaterials in eine mit der Hauptkavität (18) in Strömungsverbindung stehende oder bringbare Nebenkavität (20) zu verdrängen,
wobei die Nebenkavität (20) zumindest abschnittsweise, vorzugsweise vollständig, beheizbar ist,
wobei die Nebenkavität (20) Teil einer Fördervorrichtung (34) ist, welche dazu ausgebildet ist, in der Nebenkavität (20) aufgenommenes fließfähiges Gießmaterial zumindest teilweise, vorzugsweise vollständig, aus der Nebenkavität (20) hinaus zu fördern,
wobei die Füllvorrichtung (12) einen in die Hauptkavität mündenden Füllkanal (28) aufweist,
**dadurch gekennzeichnet, dass** die Nebenkavität (20) mit dem Füllkanal (28) derart in Strömungsverbindung steht oder bringbar ist, dass fließfähiges Gießmaterial durch die Fördervorrichtung (34) unter Zwischenanordnung eines Strömungskanals (38) von der Nebenkavität (20) weg in den Füllkanal (28) hinein förderbar ist.

2. Gießvorrichtung nach Anspruch 1,
**dadurch gekennzeichnet, dass** zur Beheizung der Nebenkavität (20) eine Heizvorrichtung (32) vorgesehen ist, welche dazu ausgebildet ist, das in die Nebenkavität (20) hinein verdrängte Gießmaterial fließfähig zu halten.

3. Gießvorrichtung nach Anspruch 1 oder 2,
**dadurch gekennzeichnet, dass** die Nebenkavität (20) ein veränderliches Volumen aufweist.

4. Gießvorrichtung nach einem der vorhergehenden Ansprüche,
**dadurch gekennzeichnet, dass** die Nebenkavität (20) unmittelbar mit der Hauptkavität (18) derart in Strömungsverbindung steht oder bringbar ist, dass fließfähiges Gießmaterial durch die Fördervorrichtung (34), gegebenenfalls unter Zwischenanordnung eines Strömungskanals (22), aus der Nebenkavität (20) in die Hauptkavität (18) förderbar ist.

5. Gießvorrichtung nach einem der vorhergehenden Ansprüche,
**dadurch gekennzeichnet, dass** ein Strömungskanal (38) vorgesehen ist, welcher dazu ausgebildet ist, fließfähiges Gießmaterial von der Nebenkavität (20) weg zu fördern und dieser Strömungskanal (38) zumindest abschnittsweise, vorzugsweise über einen Großteil seiner Länge, durch eine Kanal-Heizvorrichtung beheizbar ist.

6. Gießvorrichtung nach einem der vorhergehenden Ansprüche,
**dadurch gekennzeichnet, dass** die Nebenkavität (20) an einem Gießwerkzeug (16), insbesondere an einem die Hauptkavität (18) enthaltenden Formwerkzeug (16) vorgesehen ist.

7. Gießvorrichtung nach einem der vorhergehenden Ansprüche,
**dadurch gekennzeichnet, dass** die Nebenkavität integral mit einer Heißkanalbaugruppe (bei 28) der Füllvorrichtung (12) ausgebildet ist.

## Claims

1. A moulding apparatus, in particular an injection-moulding apparatus (10), for producing at least partly hollow articles, wherein the moulding apparatus comprises:
- a filling device (12) which is designed to fill flowable moulding material into a main cavity (18), and also
- a displacing device (14) which is designed, upon its actuation, to displace one portion of the moulding material filling the main cavity (18) into a secondary cavity (20) which is or can be brought into flow connection with the main cavity (18),
wherein the secondary cavity (20) can be heated at least in section but preferably completely,
wherein the secondary cavity (20) is part of a feed device (34) which is designed to discharge flowable moulding material, which is accommodated in the secondary cavity (20), at least partly but preferably completely from the secondary cavity (20),
wherein the filling device (12) has a filling passage (28) opening into the main cavity,
**characterised in that** the secondary cavity (20) is or can be brought into flow connection with the filling passage (28) in such a way that flowable moulding material can be fed by the feed device (34), with interposition of a flow passage (38), away from the secondary cavity (20) into the filling passage (28).

2. A moulding apparatus according to Claim 1,
**characterised in that** a heating device (32) is provided to heat the secondary cavity (20), which heating device is designed to maintain the moulding material displaced into the secondary cavity (20) in a fluid state.

3. A moulding apparatus according to Claim 1 or 2,
**characterised in that** the secondary cavity (20 is of variable volume.

4. A moulding apparatus according to any one of the preceding Claims, **characterised in that** the secondary cavity (20) is or can be brought directly into flow connection with the main cavity (18) in such a way that flowable moulding material can be discharged by the feed device (34), optionally with interposition of a flow passage (22), from the secondary cavity (20) into the main cavity (18).

5. A moulding apparatus according to any one of the preceding Claims, **characterised in that** a flow passage (38) is provided, which is designed to feed flowable moulding material away from the secondary cavity (20) and this flow passage (38) can be heated at least in sections but preferably over the majority of its length by a passage-heating device.

6. A moulding apparatus according to any one of the preceding Claims, **characterised in that** the secondary cavity (20) is provided on a moulding tool (16), in particular on a mould (16) containing the main cavity (18).

7. A moulding apparatus according to any one of the preceding Claims, **characterised in that** the secondary cavity is formed integrally with a heating-passage assembly (at 28) of the filling device (12).

## Revendications

1. Dispositif de coulée, en particulier dispositif de coulée sous pression (10), pour la production d'objets au moins partiellement creux, dans lequel le dispositif de coulée comprend:
- un dispositif de remplissage (12), qui est conçu pour introduire du matériau de coulée liquide dans une cavité principale (18), ainsi que
- un dispositif de refoulement (14), qui est conçu pour refouler, lorsqu'il est activé, une partie du matériau de coulée introduit dans la cavité principale (18) dans une cavité annexe (20) qui est ou peut être reliée en liaison d'écoulement à la cavité principale (18),
dans lequel la cavité annexe (20) peut être chauffée au moins localement, de préférence entièrement,
dans lequel la cavité annexe (20) fait partie d'un dispositif de transport (34), qui est conçu pour transporter du matériau de coulée liquide contenu dans la cavité annexe (20), au moins partiellement, de préférence entièrement, à partir de la cavité annexe (20),
dans lequel le dispositif de remplissage (12) présente un canal de remplissage (28) débouchant dans la cavité principale,
**caractérisé en ce que** la cavité annexe (20) est ou peut être reliée en liaison d'écoulement au canal de remplissage (28), de telle manière que du matériau de coulée liquide puisse être transporté par le dispositif de transport (34), avec interposition d'un canal d'écoulement (38), de la cavité annexe (20) au canal de remplissage (28).

2. Dispositif de coulée selon la revendication 1, **caractérisé en ce qu'**il est prévu, pour le chauffage de la cavité annexe (20), un dispositif de chauffage (32) qui est conçu pour maintenir à l'état liquide le matériau de coulée refoulé dans la cavité annexe (20).

3. Dispositif de coulée selon la revendication 1 ou 2, **caractérisé en ce que** la cavité annexe (20) présente un volume variable.

4. Dispositif de coulée selon l'une quelconque des revendications précédentes, **caractérisé en ce que** la cavité annexe (20) est ou peut être reliée directement, en liaison d'écoulement, à la cavité principale (18) de telle manière que du matériau de coulée liquide puisse être transporté par le dispositif de transport (34), éventuellement avec interposition d'un canal d'écoulement (22), de la cavité annexe (20) à la cavité principale (18).

5. Dispositif de coulée selon l'une quelconque des revendications précédentes, **caractérisé en ce qu'**il est prévu un canal d'écoulement (38), qui est conçu pour transporter du matériau de coulée liquide à partir de la cavité annexe (20) et ce canal d'écoulement (38) peut être chauffé au moins localement, de préférence sur une grande partie de sa longueur, par un dispositif de chauffage de canal.

6. Dispositif de coulée selon l'une quelconque des revendications précédentes, **caractérisé en ce que** la cavité annexe (20) est prévue sur un outil de coulée (16), en particulier sur un outil de moulage (16) contenant la cavité principale (18).

7. Dispositif de coulée selon l'une quelconque des revendications précédentes, **caractérisé en ce que** la cavité annexe est réalisée intégralement avec un module de canal de chauffage (en 28) du dispositif de remplissage (12).
